# EUROPEAN PATENT SPECIFICATION

(11) **EP 1 641 201 B1**
(45) Date of publication and mention of the grant of the patent: **11.11.2009**
(21) Application number: 05020283.7
(22) Date of filing: 16.09.2005
(51) Int. Cl.: H04L 12/58, H04L 12/14

(54) **Electronic mail charging system and method**
System und Verfahren zur Verrechnung von elektronischer Post
Système et méthode de facturation de courriers électroniques

(30) Priority: 28.09.2004 JP 2004282444
(43) Date of publication of application: 29.03.2006
(73) Proprietor: NTT DoCoMo, Inc., Chiyoda-ku Tokyo 100-6150 (JP)
(72) Inventor: Enatsu, Tomoko Int.Prop.Dept.,NTT DoCoMo, Inc., Chiyoda-ku Tokyo 100-6150 (JP); Nasu, Tooru Int.Prop.Dept.,NTT DoCoMo, Inc., Chiyoda-ku Tokyo 100-6150 (JP); Kawano, Shikiko Int.Prop.Dept.,NTT DoCoMo, Inc., Chiyoda-ku Tokyo 100-6150 (JP); Endo, Satoshi Int.Prop.Dept.,NTT DoCoMo, Inc., Chiyoda-ku Tokyo 100-6150 (JP); Kikuchi, Daisuke Int.Prop.Dept.,NTT DoCoMo, Inc., Chiyoda-ku Tokyo 100-6150 (JP)
(74) Representative: Viering, Jentschura & Partner

(56) References cited:
- EP-A- 1 199 852
- US-A1- 2002 049 611
- PATENT ABSTRACTS OF JAPAN vol. 2002, no. 07, 3 July 2002 (2002-07-03) & JP 2002 073484 A (DAINIPPON PRINTING CO LTD), 12 March 2002 (2002-03-12)

## Description

### BACKGROUND OF THE INVENTION

### Field of the Invention

The present invention relates to an electronic mail charging system for placing charges on the transmission and reception of electronic mail, and an electronic mail charging method in this system.

### Related Background of the Invention

Techniques for placing charges on the transmission and reception of electronic mail through mobile communication and the like have been proposed in the prior art, for example the technique described in Japanese Unexamined Patent Application Publication 2002-135311, which is a publication for unexamined Japanese patent applications.

The document EP 1199852 discloses that an IP address of a communication party is detected by analyzing flow information of communication carried out by the user, and in case the IP address of the communication party is an IP address registered in advance by the user, the communication charge appropriate to the communication carried out by the user is calculated in the discount charge form. In case the communication party is a communication party registered in a group, the communication charge carried out is calculated using the discount charge form different from the standard communication charge.

### SUMMARY OF THE INVENTION

When placing charges on the transmission and reception of electronic mail as described above, a service is provided for reducing the charges for transmission and reception of electronic mail between user terminals belonging to a predetermined group, such as family members, for example. To realize this service, information regarding the terminals of the group to be subjected to charge reduction is held in list format, and when an electronic mail is transmitted and received, the terminal information in list format is referenced to determine whether or not the charge reduction should be applied.

However, when the information regarding the terminals of the group is held in list format as described above, the amount of data that must be held expands as the number of groups or group terminals increases, and as a result, the service processing cannot be performed efficiently.

An object of the present invention is to provide an electronic mail charging method and electronic mail charging system, in which processing for a service such as a reduction in the charges placed on electronic mail that is transmitted and received within a predetermined group can be performed efficiently even in cases such as when the number of groups or terminals increases.

An electronic mail charging method of the present invention comprises: a user database storing information specifying a terminal in association with a group ID of a group to which the terminal belongs; ID comparing means for detecting the transmission of an electronic mail from a first terminal to a second terminal, obtaining information specifying the first terminal and second terminal on the basis of the electronic mail, referring to the user database on the basis of this information, and comparing the group ID corresponding to the first terminal with the group ID corresponding to the second terminal; and charging information generating means for generating charging information in order to place charges on the transmitted electronic mail on the basis of the result of the comparison performed by the ID comparing means.

In the electronic mail charging method of the present invention, services such as reducing the charges placed on electronic mail that is transmitted and received within a predetermined group can be performed by comparing the group ID corresponding to the electronic mail transmission source terminal (first terminal) with the group ID corresponding to the transmission destination terminal (second terminal). In so doing, there is no need to hold information regarding the terminals of the group in list format, and hence the processing for the service described above can be performed more efficiently, even in cases such as when the number of groups or terminals is large.

Further, the terminal is preferably a mobile communication terminal, the electronic mail is preferably transmitted via a mobile communication network, and the information specifying the terminal is preferably a telephone number corresponding to the mobile communication terminal. According to this constitution, the processing for the service described above, in charging for electronic mail exchanged through mobile communication, can be performed even more efficiently.

Further, the user database preferably stores the information specifying the terminal in association with information relating to a type of group ID, and the ID comparing means preferably determines whether or not to perform the comparison by referring to the information relating to the type of group ID of at least one of the first terminal and second terminal. According to this constitution, when the group IDs are constituted by long character strings or the like, for example, processing can be performed efficiently by referencing the information relating to the shorter group ID types first. Moreover, group ID management can be performed efficiently. Note that information expressing whether or not the terminal belongs to a group is also included in the information relating to the group ID type.

The electronic mail charging system of the present invention preferably further comprises: comparison information attaching means for attaching comparison information, relating to the result of the comparison performed by the ID comparing means, to the electronic mail; and comparison information referencing means for detecting that the second terminal has issued a request to receive the electronic mail, and referring to the comparison information attached to the electronic mail by the comparison information attaching means. The charging information generating means preferably generates the charging information for placing charges on the transmitted electronic mail on the basis of the result of the referencing performed by the comparison information referencing means. According to this constitution, processing for the service described above can be performed without comparing the group IDs again in cases such as when charges are also placed on reception of an electronic mail by the transmission destination terminal. Note that the comparison information referencing performed by the comparison information referencing means includes determining whether or not the comparison information is attached, and referencing the comparison information when the comparison information is attached.

Incidentally, the present invention may be described as an electronic mail charging method as well as the above electronic mail charging system. These are substantially identical inventions, differing only in category, and exhibit the same actions and effects. The electronic mail charging method according to the present invention is an electronic mail charging method in an electronic mail charging system comprising a user database which stores information specifying a terminal in association with a group ID of a group to which the terminal belongs. The electronic mail charging method comprises the steps of: detecting the transmission of an electronic mail from a first terminal to a second terminal, obtaining information specifying the first terminal and second terminal on the basis of the electronic mail, referring to the user database on the basis of this information, and comparing the group ID corresponding to the first terminal with the group ID corresponding to the second terminal; and generating charging information in order to place charges on the transmitted electronic mail on the basis of the result of the comparison performed in the ID comparing step.

According to the present invention, when performing a service such as reducing the charges placed on electronic mail that is transmitted and received within a predetermined group, information regarding the terminals of the group does not have to be held in list format, and hence the processing for this service can be performed efficiently even in cases such as when the number of groups or terminals is large.

### BRIEF DESCRIPTION OF THE DRAWINGS

Fig. 1 is a view showing the constitution of an electronic mail charging system according to an embodiment of the present invention;

Fig. 2 is a view showing information stored in tables of a user database;

Fig. 3 is a flowchart illustrating processing executed by the electronic mail charging system of this embodiment when an electronic mail is transmitted; and

Fig. 4 is a flowchart illustrating processing executed by the electronic mail charging system of this embodiment when an electronic mail reception request is issued.

### DESCRIPTION OF THE PREFERRED EMBODIMENTS

A preferred embodiment of an electronic mail charging system according to the present invention will be described in detail below with reference to the drawings. Note that in the drawings, identical elements have been allocated identical reference numerals, and duplicate description thereof has been omitted.

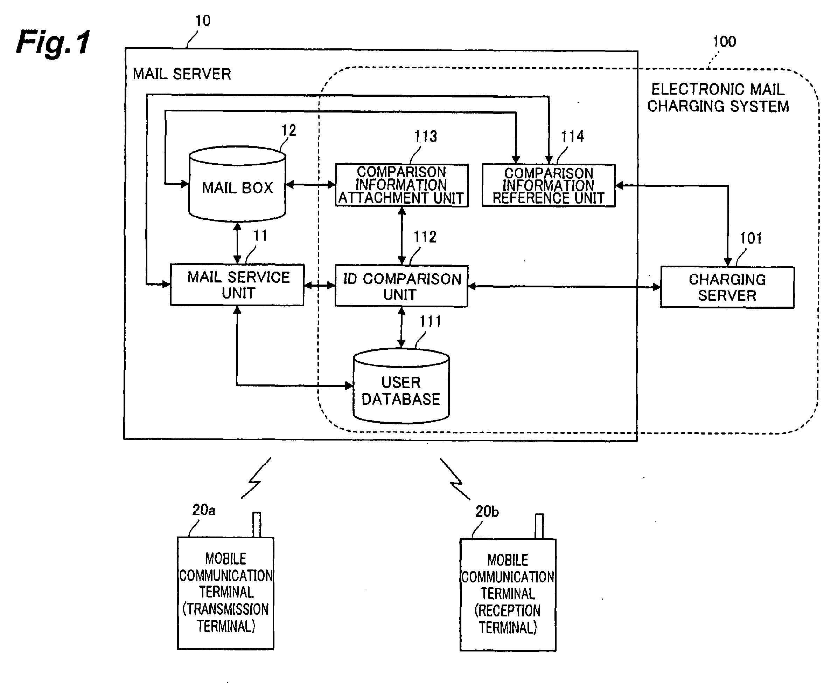

Fig. 1 shows the constitution of an electronic mail charging system 100 according to this embodiment. The electronic mail charging system 100 is a system for placing charges on the transmission and reception of electronic mail, performed by a mail server 10. The electronic mail charging system 100 performs a service for reducing the charges placed on transmission and reception between user terminals belonging to a predetermined group. The predetermined group corresponds to a family, users belonging to the same business enterprise, and so on, for example. This electronic mail discounting service is provided to subscribers by a network provider which provides a mobile communication network, for example.

The constitutions of the mail server 10, the electronic mail charging system 100, and a mobile communication terminal 20 will now be described in sequence. The mail server 10 is connected to a mobile communication network (not shown) such as a mobile telephone network. The mail server 10 provides the mobile communication terminal 20 with an electronic mail function by receiving requests or the like for the transmission and reception of electronic mail, which are transmitted from the mobile communication terminal 20 over the mobile communication network. The mail server 10 comprises a mail service unit 11 and a mail box 12. The mail server 10 further comprises as constitutional elements functions that are also included in the electronic mail charging system 100, but these will be described later.

The mail service unit 11 provides the mobile communication terminal 20 with an electronic mail function. More specifically, the mail service unit 11 receives an electronic mail transmitted from a transmission source mobile communication terminal 20a, stores the electronic mail in the mail box 12, and transmits notification of the incoming mail to a mobile communication terminal 20b serving as the transmission destination of the electronic mail. The mail service unit 11 also receives a request to obtain the electronic mail, which is transmitted from the transmission destination mobile communication terminal 20b, obtains the electronic mail from the mail box 12, and transmits the electronic mail to the transmission destination mobile communication terminal 20b. Upon reception of an electronic mail transmitted from the mobile communication terminal 20 or upon reception of an electronic mail reception request from the mobile communication terminal 20, the mail service unit 11 notifies the electronic mail charging system 100 thereof.

Note that the transmission and reception of electronic mail in accordance with the functions of the mail service unit 11 described above is performed between mobile communication terminals 20 that are capable of transmitting and receiving information to and from the mail server 10 via the aforementioned mobile communication network. When an electronic mail is transmitted and received between the mobile communication terminal 20 and a terminal that is provided with an electronic mail function by a different Internet service provider, for example, the electronic mail is transmitted and received between mail servers.

The mail box 12 is used to store electronic mail that is transmitted from the mobile communication terminal 20 as descried above.

As shown in Fig. 1, the electronic mail charging system 100 comprises a user database 111, an ID comparison unit (ID comparing means) 112, a comparison information attachment unit (comparison information attaching means) 113, a comparison information reference unit (comparison information referencing means) 114, and a charging server (charging information generating means) 101. As shown in Fig. 1, of these constitutional elements, the user database 111, ID comparison unit 112, comparison information attachment unit 113, and comparison information reference unit 114 are included in the functions of the mail server 10.

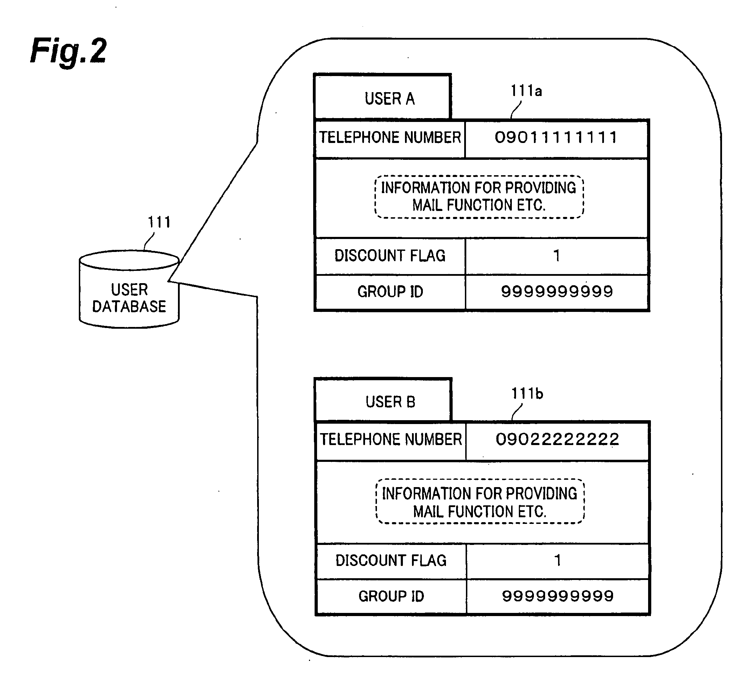

The user database 111 stores a telephone numbers, which serve as information specifying the mobile communication terminals 20 that are capable of connecting to the mail server 10 via the mobile communication network, in association with a group ID of the group to which these mobile communication terminals 20 belong. Here, the group ID is used to specify a group, and corresponds to a character string constituted by numbers, alphabetic characters, and so on, which is unique to each group, for example. Specifically, a group ID constituted by a string of ten numerals is used. The user database 111 stores the information described above for each user of the mobile communication terminals 20, as shown in tables 111a, 111b in Fig. 2.

The table 111a, for example, holds information relating to the mobile communication terminal 20 of a user A. In the table 111a, the telephone number of the mobile communication terminal 20 is held in association with a discount flag and the group ID. Here, the discount flag is information indicating whether or not the mobile communication terminal 20 belongs to a group, for example. In other words, the discount flag is information expressing whether or not the user of the mobile communication terminal 20 is eligible to receive a reduction in electronic mail charges. If the discount flag is at "0", for example, this indicates that the mobile communication terminal 20 does not belong to any group, or in other words that the user is not eligible to receive a reduction in charges. If the discount flag has a value other than "0", this indicates that the mobile communication terminal 20 belongs to a group, or in other words that the user is eligible to receive a reduction in charges on predetermined conditions.

The discount flag may also indicate information relating to the type of group ID. For example, if the discount flag is at "1", this indicates that the mobile communication terminal 20 belongs to a group in the category of "family", and if the discount flag is at "2", this indicates that the mobile communication terminal 20 belongs to a group in the category of "business". By having the discount flag indicate such information, differences in services such as charge reduction can be provided in accordance with the group category. The discount flag may also be constituted to be capable of holding a plurality of group IDs. For example, the discount flag may be capable of holding a multiple digit number such as "12", and hence the mobile communication terminal 20 may belong to a plurality of groups, i.e. both of the aforementioned "family" and "business" categories. In this case, each group may be provided with a degree of priority indicating the group category that is to be prioritized for service.

Note that the information in the user database 111 is inputted by a manager of the electronic mail charging system 100 or the like, and stored in advance. Further, the user database 111 may be constituted to reflect data from a client management server or the like, which is managed on the mobile communication network, for example. Also, it is assumed here that the user database 111 is included in the mail server 10, but the user database 111 may be constituted separately from the mail sever 10.

The user database 111 preferably holds not only information used in electronic mail charging, but also information required for the mail server 10 to provide the mobile communication terminal 20 with an electronic mail function, or more specifically, information required to perform user authentication and so on. By holding data in this manner, the number of times the user database 111 is accessed and the length of time the user database 111 is referenced can be reduced during the processing performed by the mail server 10. Further, when a database holding the information required to provide the electronic mail function pre-exists, the database 111 of this embodiment can be constructed by adding information such as the group ID to the pre-existing database.

When the mobile communication terminal 20 transmits electronic mail, the ID comparison unit 112 detects the transmission. Following detection, the ID comparison unit 112 obtains the telephone numbers of the transmission source mobile communication terminal 20 and transmission destination mobile communication terminal 20 on the basis of the electronic mail, refers to the user database 111 on the basis of these telephone numbers, and compares the group IDs of the terminals 20. The charging server 101 is then notified of information relating to the result of the comparison. When the group IDs match, for example, the charging server 101 is notified that the charges relating to transmission of the electronic mail are subject to discount. Note that detection of the transmission of the electronic mail is achieved through notification by the mail service unit 11. Before comparing the group IDs, the ID comparison unit 112 refers to the discount flag corresponding to each terminal 20 to determine whether or not to perform the comparison. The processing performed by the ID comparison unit 112 will be described in further detail during description of the processing performed by the electronic mail charging system 100.

The comparison information attachment unit 113 attaches the comparison information relating to the result of the comparison performed by the ID comparison unit 112 to an electronic mail that has been stored in the mail box 12 by the mail service unit 11. More specifically, when the ID comparison unit 112 determines that the group IDs match, comparison information based on the comparison performed by the ID comparison unit 112, indicating that the charges relating to reception of the electronic mail are subject to discount, is attached. This attachment is performed by adding the information to the header of the electronic mail, for example.

When an electronic mail reception request is issued by the mobile communication terminal 20, the comparison information reference unit 114 detects the reception request, and refers to the comparison information attached to the electronic mail. The charging server 101 is then notified of the referenced information. The comparison information reference unit 114 also refers to the comparison information and notifies the charging server 101 of the referenced information when the mail service unit 11 transmits notification of an incoming mail to the reception terminal 20b, or re-transmits notification of an incoming mail if the notification does not reach the reception terminal 20b initially.

The charging server 101 generates charging information used to place charges in relation to an electronic mail on the basis of the information provided by the ID comparison unit 112 or comparison information reference unit 114. When information indicating a discount or the like is included in the notified information, charging information indicating the discount is generated. The user of the mobile communication terminal 20 or the like is then charged on the basis of the generated charging information.

The mail server 10 and charging server 101 are constituted by information processing apparatuses comprising a CPU, memory, storage, and so on. The functions of the various constitutional elements 12 described above are realized by the CPU, memory, storage, and so on.

The mobile communication terminal 20 is used by a user, and is capable of connecting to the mail sever 10 via the mobile communication network to transmit and receive electronic mail. The mobile communication terminal 20 is specified by a telephone number. In this embodiment, the mobile communication terminal 20a which transmits electronic mail is referred to as the transmission terminal 20a, and the mobile communication terminal 20b which receives electronic mail transmitted by the transmission terminal 20a is referred to as the reception terminal 20b. It is assumed that the information regarding the transmission terminal 20a, which is stored in the user database 111, corresponds to the information in the table 111a in Fig. 2, and the information regarding the reception terminal 20b corresponds to the table 111b in Fig. 2. Specifically, the mobile communication terminal 20 corresponds to a mobile telephone or the like comprising a CPU, a mobile wireless communication module, and so on.

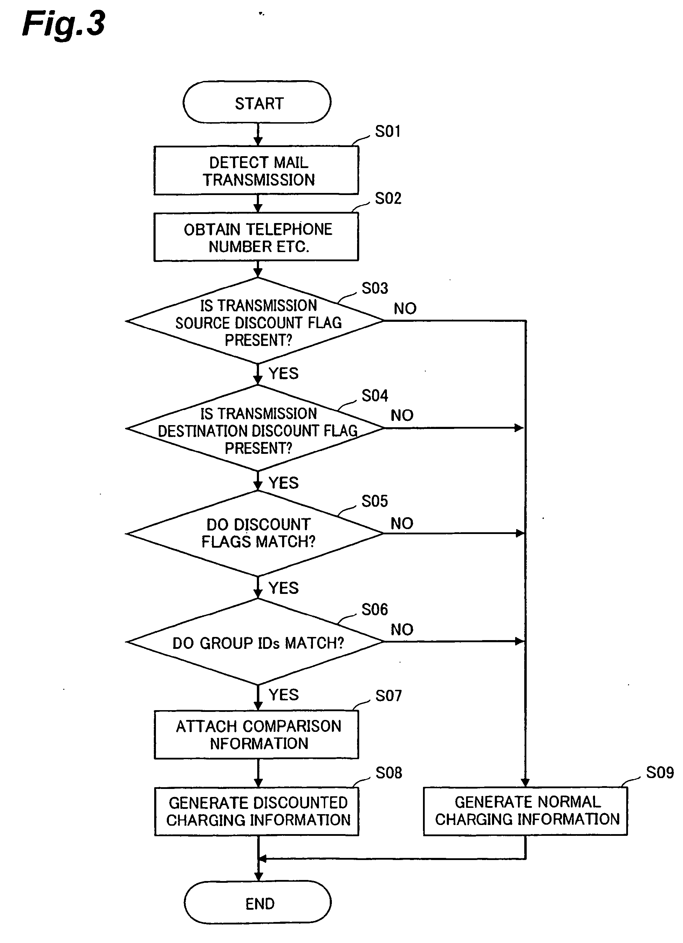

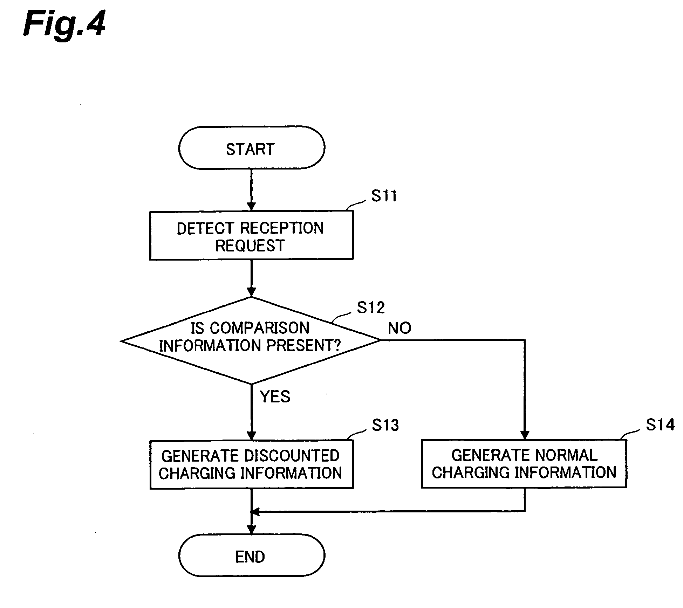

Processing executed by the electronic mail charging system 100 of this embodiment will now be described using the flowcharts in Figs. 3 and 4. Processing is executed in the electronic mail charging system 100 when an electronic mail is transmitted from the transmission terminal 20a, and when an electronic mail reception request is issued by the reception terminal 20b. First, the processing performed when the transmission terminal 20a transmits an electronic mail to the reception terminal 20b will be described using the flowchart in Fig. 3.

To transmit an electronic mail to the reception terminal 20b, first the electronic mail is transmitted to the mail server 10 through user manipulation of the transmission terminal 20a or the like. In the mail server 10, the mail service unit 11 receives the electronic mail. Upon reception of the electronic mail, the mail service unit 11 notifies the ID comparison unit 112 that the electronic mail has been received. Through this notification, the ID comparison unit 112 detects that electronic mail transmission has been performed (S01). The electronic mail received by the mail service unit 11 is stored in the mail box 12. The mail service unit 11 then transmits an incoming mail notification to the reception terminal 20b to inform the reception terminal 20b that an electronic mail has been transmitted.

Following detection of the electronic mail transmission, the ID comparison unit 112 obtains the telephone numbers of the transmission terminal 20a and reception terminal 20b on the basis of the electronic mail (S02). The telephone numbers may be obtained by referring to the header part of the electronic mail, or by referring to a reference database on the basis of predetermined information that is attached to the electronic mail, for example. The ID comparison unit 112 refers to the user database 111 on the basis of the telephone numbers of the transmission terminal 20a and reception terminal 20b to obtain the discount flags and group IDs corresponding to the transmission terminal 20a and reception terminal 20b. Referencing of the user database 111 by the ID comparison unit 112 is preferably performed at the same time as the mail service unit 11 accesses the user database 111 during user authentication. In so doing, the number of times the user database 111 is accessed can be reduced as far as possible, and hence the processing efficiency can be improved in cases such as when a large quantity of electronic mail must be processed.

Next, the ID comparison unit 112 determines whether or not the discount flag corresponding to the transmission terminal 20a takes a value other than "0" (S03). When the discount flag is at "0", normal charges are applied to transmission of the mail. The ID comparison unit 112 transmits information specifying the user of the transmission terminal 20a, or in other words the charging destination, and information such as the data amount (number of packets) for determining the charge, to the charging server 101. At the time of this transmission, information indicating a reduction in the electronic mail charge is not transmitted. The charging server 101 generates charging information (for a normal charge to which no discount is applied) on the basis of the information transmitted from the ID comparison unit 112 (S09).

When the discount flag takes a value other than "0" as shown in the table 111a in Fig. 2, the ID comparison unit 112 then determines whether or not the discount flag corresponding to the reception terminal 20b takes a value other than "0" (S04). When the discount flag is at "0", normal charges are applied to transmission of the mail. In this case, the ID comparison unit 112 transmits similar information to that described above to the charging server 101, whereupon the charging server 101 generates charging information (for a normal charge to which no discount is applied) on the basis of this information (S09).

When the discount flag takes a value other than "0" as shown in the table 111 b in Fig. 2, the ID comparison unit 112 then determines whether or not the value of the discount flag corresponding to the transmission terminal 20a matches the value of the discount flag corresponding to the reception terminal 20b (S05). When the values do not match, for example when the group categories are divided between the "family" category and the "business" category, then no charge reduction is applied, and transmission of the mail is subjected to normal charges. In this case, the ID comparison unit 112 transmits similar information to that described above to the charging server 101, whereupon the charging server 101 generates charging information (for a normal charge to which no discount is applied) on the basis of this information (S09).

When the values of the discount flags match as shown in Fig. 2, the ID comparison unit 112 determines whether or not the group corresponding to the transmission terminal 20a and the group corresponding to the reception terminal 20b match (S06). When the group IDs do not match, this indicates that the users of the respective terminals 20 belong to difference groups, and therefore no charge reduction is applied, and transmission of the mail is subjected to normal charges. In this case, the ID comparison unit 112 transmits similar information to that described above to the charging server 101, whereupon the charging server 101 generates charging information (for a normal charge to which no discount is applied) on the basis of this information (S09).

When the values of the discount flags match as shown in Fig. 2, the charges placed on the mail transmission are subject to discount. In this case, the ID comparison unit 112 notifies the comparison information attachment unit 113 thereof. On the basis of this notification, the comparison information attachment unit 113 attaches comparison information, indicating that the charges relating to reception of the electronic mail are subject to discount, to the header of the electronic mail stored in the mail box 12 by the mail service unit 11 (S07). This comparison information is used when the electronic mail is received by the reception terminal 20b.

Next, the ID comparison unit 112 transmits information indicating that a discount is to be applied to the charges for transmission of the mail, information specifying the user of the transmission terminal 20a, or in other words the charging destination, and information such as the data amount (number of packets) for determining the charge, to the charging server 101. The charging sever 101 generates discounted charging information on the basis of the information transmitted from the ID comparison unit 112 (S08). Charging information relating to the notification of an incoming mail to the reception terminal 20b is also generated after applying the discount (in this case, the user of the reception terminal 20b serves as the charging destination). The processing for creating charging information in this case is performed by having the comparison information reference unit 114 reference the comparison information, similarly to the case to be described below, in which an electronic mail reception request is issued by the reception terminal 20b.

The processing performed when an electronic mail is transmitted from the transmission terminal 20a to the reception terminal 20b was described above. Next, the processing performed when an electronic mail reception request is issued by the reception terminal 20b will be described using the flowchart in Fig. 4.

An electronic mail reception request is transmitted to the mail server 10 through manipulation of the reception terminal 20b by the user or the like. A reception request is issued when notification of an incoming mail has been issued to the reception terminal 20b, when the user of the reception terminal 20b wishes to check whether or not any electronic mail addressed to the reception terminal 20b is stored in the mail box 12 of the mail server 10, and so on. When notification of an incoming mail has been issued to the reception terminal 20b, the reception request usually specifies the mail pertaining to the incoming mail notification or the mail type. In the mail server 10, the mail service unit 11 receives the reception request. Upon reception of the reception request, the mail service unit 11 notifies the comparison information reference unit 114 thereof. Through this notification, the comparison information reference unit 114 detects the reception request (S11). The mail service unit 11 retrieves the electronic mail addressed to the reception terminal 20b from the mail box 12, and transmits the mail to the reception terminal 20b.

Next, the comparison information reference unit 114 refers to the header and so on of the electronic mail to be transmitted to the reception terminal 20b by the mail service unit 11 to determine whether or not the comparison information described above is attached to the electronic mail (S12). When the comparison information is not attached, reception of the mail is subject to normal charges. In this case, the comparison information reference unit 114 obtains information specifying the user of the reception terminal 20b, or in other words the charging destination, from the user database 111 and so on, and transmits this information, together with information such as the data amount (number of packets) for determining the charge, to the charging server 101. At the time of this transmission, information indicating a reduction in the electronic mail charge is not transmitted. The charging server 101 generates charging information (for a normal charge to which no discount is applied) on the basis of the information transmitted from the comparison information reference unit 114 (S 14).

When the comparison information is attached, this indicates that reception of the mail is subject to a charge reduction. In this case, the comparison information reference unit 114 transmits information indicating that a reduction is to be applied to the charge placed on reception of the mail, information specifying the user of the reception terminal 20b, or in other words the charging destination, and information such as the data amount (number of packets) for determining the charge, to the charging server 101. The charging sever 101 generates discounted charging information on the basis of the information transmitted from the comparison information reference unit 114 (S13). Thus processing is performed when an electronic mail reception request is issued by the reception terminal 20b.

According to the electronic mail charging system 100 of the embodiment described above, there is no need to hold information regarding the terminals 20 of a group in list format, and hence the processing for the service described above can be performed more efficiently, even in cases such as when the number of groups or terminals 20 is large. More specifically, the amount of information stored in the database can be reduced below that of the aforementioned list format method, and hence the database can be used efficiently. Moreover, the amount of time that the database is referenced can be reduced below that of the list format method, and therefore the load on the server apparatus can be lightened. Also, wireless communication resources can be used effectively.

By employing the mobile communication terminal 20 as a terminal, transmitting electronic mail via a mobile communication network, and using a telephone number as information specifying a terminal, as in this embodiment, the processing for the service described above, in charging for electronic mail exchanged through mobile communication, can be performed even more efficiently. Note, however, that the present invention is not limited to the above embodiment, and may be applied to charges relating to electronic mail that is exchanged over the Internet. Further, the information specifying the terminal may be a unique ID or the like allocated to the terminal rather than a telephone number.

By referencing information relating to the type of group ID, such as the discount flag, first as in this embodiment, the processing for the service described above can be performed even more efficiently. More specifically, when the group IDs are constituted by long character strings or the like, processing can be performed efficiently by referencing information relating to the shorter group ID types first. The difference in comparison time caused by the length of the character strings is in millisecond units, but when the processing volume is large, it is effective to refer to the group ID types first. Moreover, this constitution facilitates group management.

Further, by attaching comparison information to the electronic mail, as in this embodiment, the processing for the service described above can be performed without comparing the group IDs again when charges are also placed on reception of the electronic mail or the like.

Furthermore, the service performed in relation to the charges may be to waive the charges completely rather than reduce the charges. Also, the charging subject may be modified from that of a normal case.

## Claims

1. An electronic mail charging system (100) comprising:
- a user database (111) storing data corresponding to each terminal specifying a terminal (20a, 20b), information expressing whether or not the terminal (20a, 20b) belongs to a group, and a group ID of a group to which said terminal (20a, 20b) belongs;
- ID comparing means (112) adapted to detect the transmission of an electronic mail from a first terminal (20a) to a second terminal (20b), obtain information specifying said first terminal (20a) and said second terminal (20b) on the basis of said electronic mail, and, based on said information referring to said data corresponding to said first terminal (20a) and said second terminal (20b) stored in said user database, determine whether each of the first and the second terminal (20a, 20b) belong to a group by being adapted to refer to the corresponding information in the user database expressing whether or not the terminal belongs to a group, and compare said group ID corresponding to said first terminal (20a) with said group ID corresponding to said second terminal (20b) when it is determined that both terminals (20a, 20b) belong to a group; and
- charging information generating means (101) adapted to generate charging information in order to place charges on said transmitted electronic mail on the basis of a result of the comparison performed by said ID comparing means.

2. The electronic mail charging system (100) according to claim 1, wherein said terminal is a mobile communication terminal (20a),
said electronic mail is transmitted via a mobile communication network, and said information specifying said terminal is a telephone number corresponding to said mobile communication terminal (20a).

3. The electronic mail charging system (100) according to claim 1 or claim 2, wherein said user database is adapted to store said information specifying said terminal (20a) in association with information relating to a type of said group ID, and
said ID comparing means (112) is adapted to determine whether or not to perform said comparison by referring to said information relating to the type of said group ID of at least one of said first terminal (20a) and said second terminal (20b).

4. The electronic mail charging system (100) according to any one of claims 1 through 3, further comprising:
- comparison information attaching means (113) adapted to attach comparison information, relating to the result of said comparison performed by said ID comparing means, to said electronic mail; and
- comparison information referencing means (114) adapted to detect that said second terminal (20b) has issued a request to receive said electronic mail, and to refer to said comparison information attached to said electronic mail by said comparison information attaching means (113), wherein said charging information generating means (101) is adapted to generate said charging information in order to place charges on said transmitted electronic mail on the basis of a result of the referencing performed by said comparison information referencing means.

5. The electronic mail charging system (100) according to any one of claims 1 through 4, wherein the information expressing whether or not the terminal (20a, 20b) belongs to a group further comprises information on which type of group the terminal (20a, 20b) belongs to, and wherein the ID comparing means (112) is further adapted to compare said group ID corresponding to said first terminal (20a) with said group ID corresponding to said second terminal (20b) only when it is determined that both terminals (20a, 20b) belong the the same type of group.

6. An electronic mail charging method for being implemented in an electronic mail charging system (100) comprising a user database (111) which stores data corresponding to each terminal (20a, 20b) specifying a terminal (20a, 20b), information expressing whether or not the terminal (20a, 20b) belongs to a group, and a group ID of a group to which said terminal (20a, 20b) belongs, said electronic mail charging method comprising the steps of:
- detecting (S01) the transmission of an electronic mail from a first terminal (20a) to a second terminal (20b),
- obtaining (S02) information specifying said first terminal (20a) and said second terminal (20b) on the basis of said electronic mail, and, based on said information, referring to said data corresponding to said first terminal (20a) and said second terminal (20b) stored in said user database (111) and determining whether each of the first and the second terminal (20a, 20b) belong to a group by referring to the corresponding information in the user database expressing whether or not the terminal belongs to a group, and
- comparing (S06) said group ID corresponding to said first terminal (20a) with said group ID corresponding to said second terminal (20b) when it is determined that both terminals (20a, 20b) belong to a group; and
- generating (S08, S09) charging information in order to place charges on said transmitted electronic mail on the basis of a result of the comparison performed in said ID comparing step.

## Patentansprüche

1. E-Mail-Abrechnungssystem (100), aufweisend:
- eine Nutzerdatenbank (111), die zu jedem Endgerät entsprechende Daten speichert, welche ein Endgerät (20a, 20b), Informationen, die ausdrücken, ob das Endgerät (20a, 20b) zu einer Gruppe gehört oder nicht, und eine Gruppen-ID einer Gruppe, zu der das Endgerät (20a, 20b) gehört, spezifizieren;
- ein ID-Vergleich-Mittel (112), eingerichtet, die Übertragung einer E-Mail von einem ersten Endgerät (20a) zu einem zweiten Endgerät (20b) zu erfassen, auf der Basis der E-Mail Informationen zu erhalten, die das erste Endgerät (20a) und das zweite Endgerät (20b) spezifizieren, und, basierend auf den Informationen Bezug nehmend auf die in der Nutzerdatenbank gespeicherten, dem ersten Endgerät (20a) und dem zweiten Endgerät (20b) entsprechenden Daten, zu ermitteln, ob jedes des ersten und des zweiten Endgeräts (20a, 20b) zu einer Gruppe gehört, indem es eingerichtet ist, Bezug zu nehmen auf die entsprechenden Informationen in der Nutzerdatenbank, welche ausdrücken, ob das Endgerät zu einer Gruppe gehört oder nicht, und die Gruppen-ID, die dem ersten Endgerät (20a) entspricht, mit der Gruppen-ID, die dem zweiten Endgerät (20b) entspricht, zu vergleichen, wenn ermittelt ist, dass beide Endgeräte (20a, 20b) zu einer Gruppe gehören; und
- ein Abrechnungsinformation-Erzeugungsmittel (101), eingerichtet, eine Abrechnungsinformation zu erzeugen, um der übertragenen E-Mail Gebühren aufzuerlegen auf der Basis eines Ergebnisses des von dem ID-Vergleich-Mittel durchgeführten Vergleichs.

2. E-Mail-Abrechnungssystem (100) gemäß Anspruch 1, wobei das Endgerät ein Mobilkommunikationsendgerät (20a) ist, die E-Mail über ein Mobilkommunikationsnetz übertragen wird und die Information, die das Endgerät spezifiziert, eine Telefonnummer ist, die dem Mobilkommunikationsendgerät (20a) entspricht.

3. E-Mail-Abrechnungssytem (100) gemäß Anspruch 1 oder Anspruch 2, wobei die Nutzerdatenbank eingerichtet ist, die Information, die das Endgerät (20a) spezifiziert, in Verbindung mit einer Information zu speichern, die den Typ der Gruppen-ID betrifft, und
das ID-Vergleich-Mittel (112) eingerichtet ist, durch Bezugnehmen auf die Information, die den Typ der Gruppen-ID von zumindest einem des ersten Endgeräts (20a) und des zweiten Endgeräts (20b) betrifft, zu ermitteln, ob der Vergleich durchgeführt wird oder nicht.

4. E-Mail-Abrechnungssystem (100) gemäß einem der Ansprüche 1 bis 3, ferner aufweisend:
- ein Vergleichsinformation-Anfügungsmittel (113), eingerichtet, eine Vergleichsinformation, die das Ergebnis des Vergleichs betrifft, welcher von dem ID-Vergleich-Mittel durchgeführt wurde, an die E-Mail anzufügen; und
- ein Vergleichsinformation-Bezugnahmemittel (114), eingerichtet, zu erfassen, dass das zweite Endgerät (20b) eine Anfrage, die E-Mail zu empfangen, herausgegeben hat, und Bezug zu nehmen auf die Vergleichsinformation, die an die E-Mail durch das Vergleichsinformation-Anfügungsmittel (113) angefügt wurde, wobei das Abrechnungsinformation-Erzeugungsmittel (101) eingerichtet ist, die Abrechnungsinformation zu erzeugen, um der übertragenen E-Mail Gebühren aufzuerlegen auf der Basis eines Ergebnisses der Bezugnahme, welche durch das Vergleichsinformation-Bezugnahmemittel durchgeführt wurde.

5. E-Mail-Abrechnungssystem (100) gemäß einem der Ansprüche 1 bis 4, wobei die Information, die ausdrückt, ob das Endgerät (20a, 20b) zu einer Gruppe gehört oder nicht, ferner eine Information darüber aufweist, zu welchem Gruppentyp das Endgerät (20a, 20b) gehört, und wobei das ID-Vergleich-Mittel (112) ferner eingerichtet ist, die Gruppen-ID, die dem ersten Endgerät (20a) entspricht, nur dann mit der Gruppen-ID, die dem zweiten Endgerät (20b) entspricht, zu vergleichen, wenn ermittelt ist, dass beide Endgeräte (20a, 20b) zu dem selben Gruppentyp gehören.

6. E-Mail-Abrechnungsverfahren, zur Implementierung in einem E-Mail-Abrechnungssystem (100) aufweisend eine Nutzerdatenbank (111), welche zu jedem Endgerät (20a, 20b) entsprechende Daten speichert, die ein Endgerät (20a, 20b), Informationen, die ausdrücken, ob das Endgerät (20a, 20b) zu einer Gruppe gehört oder nicht, und eine Gruppen-ID einer Gruppe, zu der das Endgerät (20a, 20b) gehört, spezifizieren, das E-Mail-Abrechnungsverfahren aufweisend die Schritte:
- Erfassen (S01) der Übertragung einer E-Mail von einem ersten Endgerät (20a) zu einem zweiten Endgerät (20b),
- Erhalten (S02) von Informationen, die das erste Endgerät (20a) und das zweite Endgerät (20b) spezifizieren, auf der Basis der E-Mail, und, basierend auf den Informationen, Bezugnehmen auf die in der Nutzerdatenbank (111) gespeicherten, dem ersten Endgerät (20a) und dem zweiten Endgerät (20b) entsprechenden Daten und Ermitteln, ob jedes des ersten und des zweiten Endgeräts (20a, 20b) zu einer Gruppe gehört, durch Bezugnehmen auf die entsprechenden Informationen in der Nutzerdatenbank, die ausdrücken, ob das Endgerät zu einer Gruppe gehört oder nicht, und
- Vergleichen (S06) der Gruppen-ID, die dem ersten Endgerät (20a) entspricht, mit der Gruppen-ID, die dem zweiten Endgerät (20b) entspricht, wenn ermittelt ist, dass beide Endgeräte (20a, 20b) zu einer Gruppe gehören; und
- Erzeugen (S08, S09) einer Abrechnungsinformation, um der übertragenen E-Mail Gebühren aufzuerlegen auf der Basis eines Ergebnisses des in dem ID-Vergleichsschritt durchgeführten Vergleichs.

## Revendications

1. Système de facturation de courrier électronique (100), comprenant :
- une base de données d'utilisateurs (111) mémorisant des données correspondant à chaque terminal spécifiant un terminal (20a, 20b), des informations indiquant si le terminal (20a, 20b) appartient ou non à un groupe, et un identifiant de groupe d'un groupe auquel ledit terminal (20a, 20b) appartient ;
- des moyens de comparaison d'identifiant (112) adaptés pour détecter la transmission d'un courrier électronique d'un premier terminal (20a) à un deuxième terminal (20b), obtenir des informations spécifiant ledit premier terminal (20a) et ledit deuxième terminal (20b) sur la base dudit courrier électronique, et, sur la base desdites informations faisant référence auxdites données correspondant audit premier terminal (20a) et audit deuxième terminal (20b) mémorisées dans ladite base de données d'utilisateurs, déterminer si chacun des premier et deuxième terminaux (20a, 20b) appartient à un groupe en étant adapté pour se référer aux informations correspondantes dans la base de données d'utilisateurs indiquant si le terminal appartient ou non à un groupe, et comparer ledit identifiant de groupe correspondant audit premier terminal (20a) avec ledit identifiant de groupe correspondant audit deuxième terminal (20b) lorsqu'il est déterminé que les deux terminaux (20a, 20b) appartiennent à un groupe ; et
- des moyens de génération d'informations de coût (101) adaptés pour générer des informations de coût afin d'appliquer un coût audit courrier électronique transmis sur la base d'un résultat de la comparaison effectuée par lesdits moyens de comparaison d'identification.

2. Système de facturation de courrier électronique (100) selon la revendication 1, dans lequel ledit terminal est un terminal de communication mobile (20a),
ledit courrier électronique est transmis par un réseau de communication mobile, et lesdites informations spécifiant ledit terminal sont un numéro de téléphone correspondant audit terminal de communication mobile (20a).

3. Système de facturation de courrier électronique (100) selon la revendication 1 ou la revendication 2, dans lequel ladite base de données d'utilisateurs est adaptée pour mémoriser lesdites informations spécifiant ledit terminal (20a) en association avec des informations concernant un type d'identifiant de groupe, et
lesdits moyens de comparaison d'identifiant (112) sont adaptés pour déterminer s'il faut ou non effectuer ladite comparaison en se référant auxdites informations concernant le type dudit identifiant de groupe d'au moins l'un dudit premier terminal (20a) et dudit deuxième terminal (20b).

4. Système de facturation de courrier électronique (100) selon l'une quelconque des revendications 1 à 3, comprenant en outre :
- des moyens pour joindre des informations de comparaison (113) adaptés pour joindre des informations de comparaison, concernant le résultat de ladite comparaison effectuée par lesdits moyens de comparaison d'identifiant, audit courrier électronique ; et
- des moyens pour se référer à des informations de comparaison (114) adaptés pour détecter que ledit deuxième terminal (20b) a émis une demande pour recevoir ledit courrier électronique, et pour se référer auxdites informations de comparaison jointes audit courrier électronique par lesdits moyens pour joindre des informations de comparaison (113), dans lequel lesdits moyens de génération d'informations de coût (101) sont adaptés pour générer lesdites informations de coût afin d'appliquer un coût audit courrier électronique transmis sur la base d'un résultat de la référence effectuée par lesdits moyens pour se référer à des informations de comparaison.

5. Système de facturation de courrier électronique (100) selon l'une quelconque des revendications 1 à 4, dans lequel les informations indiquant si le terminal (20a, 20b) appartient ou non à un groupe comprennent en outre des informations concernant le type de groupe auquel le terminal (20a, 20b) appartient, et dans lequelles moyens de comparaison d'identifiant (112) sont en outre adaptés pour comparer ledit identifiant de groupe correspondant audit premier terminal (20a) avec ledit identifiant de groupe correspondant audit deuxième terminal (20b) uniquement lorsqu'il est déterminé que les deux terminaux (20a, 20b) appartiennent au même type de groupe.

6. Procédé de facturation de courrier électronique pour une mise en oeuvre dans un système de facturation de courrier électronique (100) comprenant une base de données d'utilisateurs (111) qui mémorise des données correspondant à chaque terminal (20a, 20b) spécifiant un terminal (20a, 20b), des informations indiquant si, oui ou non, le terminal (20a, 20b) appartient à un groupe, et un identifiant de groupe d'un groupe auquel ledit terminal (20a, 20b) appartient, ledit procédé de facturation de courrier électronique comprenant les étapes consistant à :
- détecter (S01) la transmission d'un courrier électronique d'un premier terminal (20a) à un deuxième terminal (20b),
- obtenir (S02) des informations spécifiant ledit premier terminal (20a) et ledit deuxième terminal (20b) sur la base dudit courrier électronique, et, sur la base desdites informations, se référer auxdites données correspondant audit premier terminal (20a) et audit deuxième terminal (20b) mémorisées dans ladite base de données d'utilisateurs (111), et déterminer si, chacun des premier et deuxième terminaux (20a, 20b) appartient à un groupe, en se référant aux informations correspondantes dans la base de données d'utilisateurs indiquant si, oui ou non, le terminal appartient à un groupe, et
- comparer (S06) ledit identifiant de groupe correspondant audit premier terminal (20a) avec ledit identifiant de groupe correspondant audit deuxième terminal (20b) lorsqu'il est déterminé que les deux terminaux (20a, 20b) appartiennent à un groupe ; et
- générer (508, S09) des informations de coût afin d'appliquer un coût audit courrier électronique transmis sur la base d'un résultat de la comparaison effectuée au cours de ladite étape de comparaison d'identifiant.
